# EUROPEAN PATENT SPECIFICATION

(11) **EP 4 547 032 B1**
(45) Date of publication and mention of the grant of the patent: **29.04.2026**
(21) Application number: 23738582.8
(22) Date of filing: 20.06.2023
(51) Int. Cl.: A23G 9/12, A23G 9/22, A23G 9/28, A23G 9/30

(54) **A MACHINE FOR PREPARING A SINGLE DOSE OF A FOOD PRODUCT**
MASCHINE ZUR HERSTELLUNG EINER EINZELDOSIS EINES LEBENSMITTELPRODUKTS
MACHINE DE PRÉPARATION D'UNE DOSE UNIQUE D'UN PRODUIT ALIMENTAIRE

(30) Priority: 21.06.2022 IT 202200013126
(43) Date of publication of application: 07.05.2025
(73) Proprietor: Revip - Rev Ice Project S.r.l., 37010 Affi (Verona) (IT)
(72) Inventor: DEMONTIS, Alessandro, 37010 Affi (Verona) (IT); DEMONTIS, Davide, 37010 Affi (Verona) (IT)
(74) Representative: Cossu, Alessandro
(86) International application number: PCT/IB2023/056357
(87) International publication number: WO 2023/248116

(56) References cited:
- EP-A2- 1 949 794
- EP-A2- 2 095 720
- WO-A1-2015/092637
- WO-A1-2020/174336

## Description

### Technical field

This invention relates to a machine, according to claim 1, for preparing a single dose of a cold food product.

In particular, the machine according to the invention is used for preparing, making and dispensing food products in a liquid or semi-liquid (creamy) state. In particular, it relates at least to ice cream products prepared with single-dose units The invention also relates to a method according to appended claim 15.

### Background art

There are currently prior art machines for preparing ice cream products addressed to an area of the market which is, so to speak, domestic, wherein the product must be dispensed in a single dose.

These machines comprise at least one cooling unit or chamber (or mixing and cooling unit).

This unit has a cylindrical cooling body with a closed rear wall and a front opening on which is applied a closing head provided with an upper hopper configured for the infeed of the liquid or creamy product and a lower opening for the extraction/dispensing of the ice cream product.

The front closing head is usually hinged on the front outer part of the cylindrical body in such a way as to be rotated and access the inner part of the cylindrical body.

The cylindrical body houses a mixer consisting of a rotor shaft (connected to a drive motor) equipped with a plurality of blades projecting radially from the shaft.

The mixer is configured for mixing the mixture of liquid-creamy product in the cylindrical body for freezing it through the rotational force and so as to incorporate in the product a predetermined quantity of air in a predetermined time.

A first example of a machine of this type is illustrated in patent document EP 2 095 720 where the front closing head is equipped with a hopper protruding for the infeed of the product and a product outfeed unit again protruding from the head and located beneath the infeed hopper.

A second example of an ice cream machine, even though not aimed at machines for domestic use, is illustrated in patent document EP 1 949 794 wherein the feeding of the product is positioned on the upper part of the machine, with product falling towards the mixing and cooling chamber, whilst the head of the chamber is equipped with a rotary element having a through opening. The rotary element can be rotated by means of a handgrip equipped with a shaped end of stroke element, to move the rotary element from a closed position of a second opening made on the head to a free passage position in which the two openings coincide.

However, this structure of prior art machines with single-dose dispensing features has several drawbacks.

The mixing unit and the cylindrical body have dimensions and dimensional ratios such that the time necessary to obtain the dispensing of a quality product is very high.

In order to control the steps for activating the mixing and cooling and then dispensing the product, electronic control units are necessary with complex operating commands and which increase the machine cost.

The annular closing element must comprise dimensions and elements for product infeed and outfeed which are extremely bulky in addition to the necessary hinge constraints to allow access to the cylindrical body.

Moreover, it has been noted that during the operation the mixing and cooling unit has an internal pressure substantially equal to the external pressure (atmospherically) when it is fed by the product to be mixed and cooled, which must be carried from a liquid state to a product/ice cream (creamy/semi-liquid)

During processing (mixing of the liquid product) the product passes from a temperature of arrival in the chamber to a temperature of around -15°C (this sudden and abrupt reduction in temperature is linked to the need to avoid the formation of crystals which are too large, in order to have a smoother and less rough compound). The air inside the cooling chamber is captured by the molecules of fat and proteins present in the product. As mentioned, the agitation of the mixture is used to favour the incorporation of the air in the product to increase the volume of the compound and soften it.

In short, therefore, the absorption of the air in the product to increase the volume reduces the pressure inside the chamber until it has a substantial negative pressure inside the chamber.

At the end of the procedure for stirring and activating the dispensing, the product is unable to be dispensed in a correct manner, not having sufficient pressure to be able to be expelled in its entirety (with problems of continuous cleaning of the mixing and cooling chamber at each change of product).

In addition, the increase in the volume of the product occludes any opening leading into the chamber with the risk of clogging some access/outlet zones of the mixture and/or the product.

### Aim of the invention

The aim of the invention is to provide a machine for preparing a single dose of a food product that overcomes the above-mentioned drawbacks of the prior art.

In particular, the aim of the invention is to provide a machine for preparing a single dose of a food product which is able to dispense a dose of product/ice cream in an extremely short time whilst maintaining a high quality of the product.

A further aim of the invention is to provide a machine for preparing a single dose of a food product which is able to actuate the operations for feeding mixture and dispensing product with a structure which is extremely simple and practical and able to reduce the overall costs of the machine.

Said aims are fully achieved by a machine for preparing a single dose of a food product according to the invention as defined in the appended claims.

### Brief description of the drawings

The main features of the invention will become more apparent from the following detailed description of a preferred, non-limiting embodiment, illustrated purely by way of example in the accompanying drawings, in which:
Figure 1 is a schematic side view of a machine for preparing a single dose of a food product according to the invention;
Figure 2 is a perspective exploded view of the mixing and cooling unit of the machine of the previous drawings;
   - Figure 2A is an exploded perspective view of an enlarged detail of Figure 2;
   - Figure 3 is a perspective view, partly in cross section, of the mixing and cooling unit of Figure 2 in an assembled configuration;
   - Figure 3A is a schematic side view of a variant embodiment of a function selector element forming part of the machine;
   - Figure 4 is a perspective rear view, with some parts cut away in order to better illustrate others, of the mixing and cooling unit of Figures 2 and 3;
   - Figure 5 is a rear perspective view, with some parts cut away to better illustrate others, of the mixing and cooling unit of Figure 4 in a configuration for feeding a creamy liquid product into the cylindrical body;
   - Figure 6 is a rear perspective view, with some parts cut away to better illustrate others, of the mixing and cooling unit of Figure 4 in a configuration for extracting a cold product obtained in the cylindrical body;
   - Figures 7 to 12 are front views of different operating positions of a control unit and a function selector element positioned on a closing head of the mixing and cooling unit.

### Detailed description of preferred embodiments of the invention

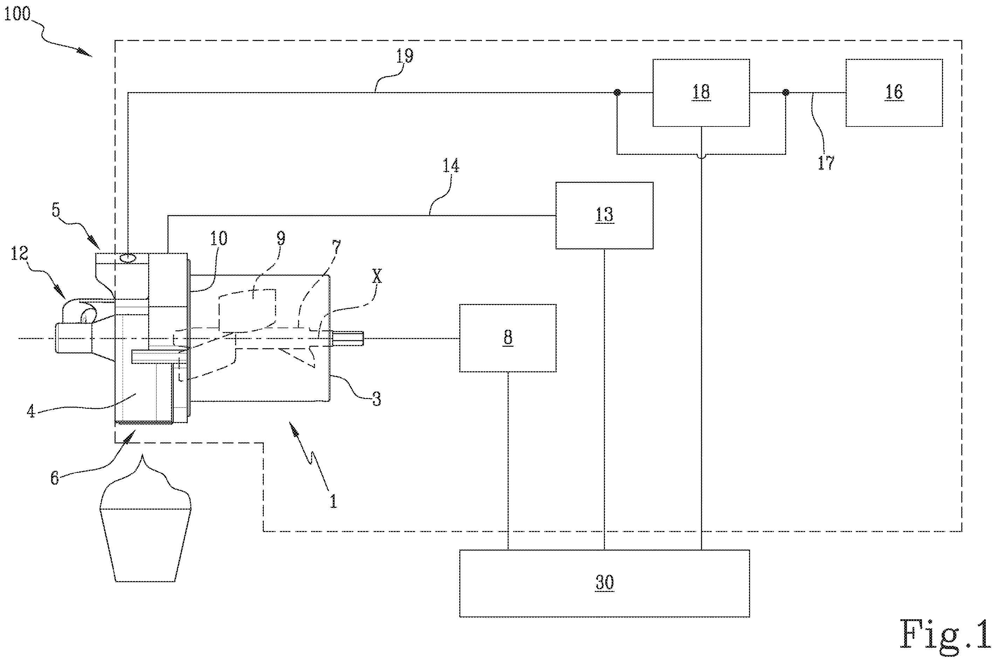

With reference to the accompanying drawings, and with particular reference to Figures 1 to 3, the machine according to the invention, labelled 100 in its entirety, is used for preparing a single dose of a cold food product (for example ice cream).

As illustrated, the machine 100 comprises a mixing and cooling unit 1.

The mixing and cooling unit 1 has at least one cylindrical cooling body 2 having a longitudinal axis X of extension, provided with a rear wall or bottom 3 and a front opening (the cooling of the cylindrical body is accomplished by a chiller circuit coiled around the cylindrical body 2, not illustrated).

The mixing and cooling unit 1 also has a head 4 for closing the front opening of the cylindrical body 2.

The closing head 4 comprises infeed means 5 configured for the entrance into the cylindrical body 2 of a liquid or creamy mixture and dispensing means 6 configured for extracting/dispensing cold product prepared in the cylindrical body 2.

The mixing and cooling unit 1 also comprises a mixer having a rotor shaft 7 positioned parallel with the longitudinal axis X of extension of the cylindrical body 2 and connected to a drive unit 8.

As illustrated, the shaft 7 is provided with a plurality of blades 9 protruding radially from the shaft 7 and configured for mixing the mixture of liquid-creamy product in the cylindrical body 2.

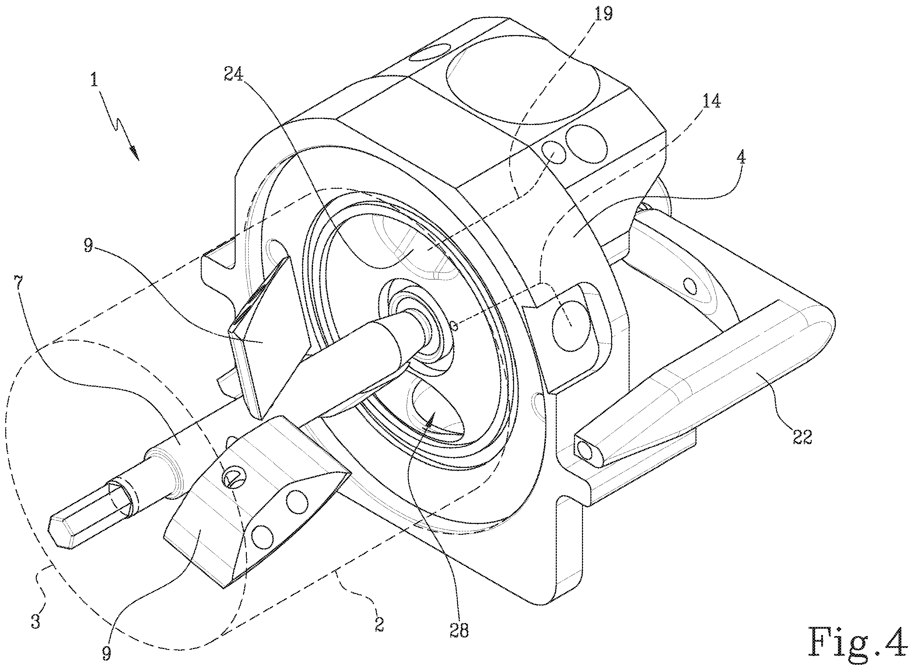

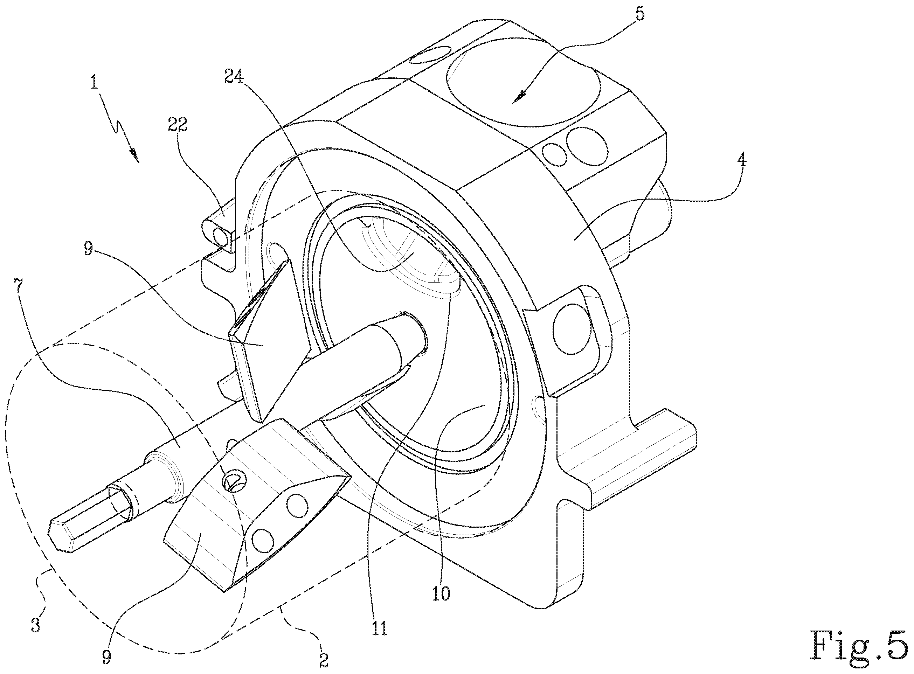

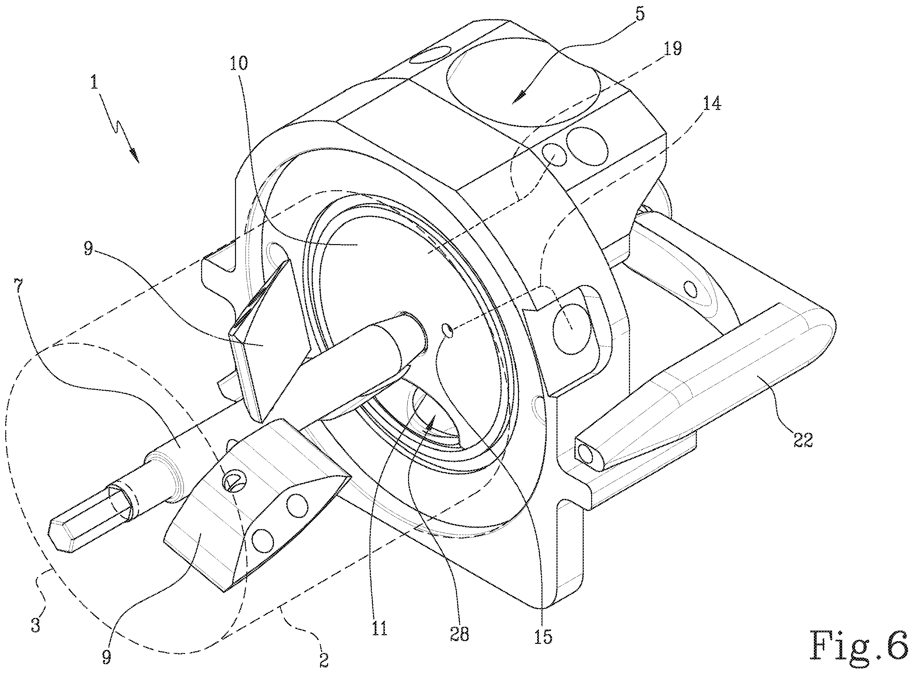

As illustrated (Figures 4-12), the closing head 4 comprises at least one function selector element 10 constrained on a surface of the closing head 4 positioned towards the inside of the cylindrical body 2.

In other words, the selector element 10 defines the inner end wall of the cylindrical body 2 and is superposed on the inner surface of the closing head 4 in such a way as to face the bottom 3 of the cylindrical body 2.

The at least one function selector element 10 has a disc shape provided with an interruption 11 along the relative circumference which is able to position itself alternatively, by means of a rotation of the selector element 10 about the relative axis, at least at the infeed means (5) or dispensing means (6) to obtain a selective connection of the cylindrical body 2 with the outside.

The machine 100 also comprises a control unit 12 outside the cylindrical body 2, connected to the selector element 10, and configured to obtain the rotation of the selector element 10.

The control unit 12 is configured to rotate and position the selector element 10 in at least three operating positions: mixture infeed position, cold product outfeed position, intermediate position for forming product with closing of the infeed means 5 and of the dispensing means 6.

As illustrated, the interruption 11 of the selector element is defined by a half-moon opening made along a peripheral zone of the disc-shaped element.

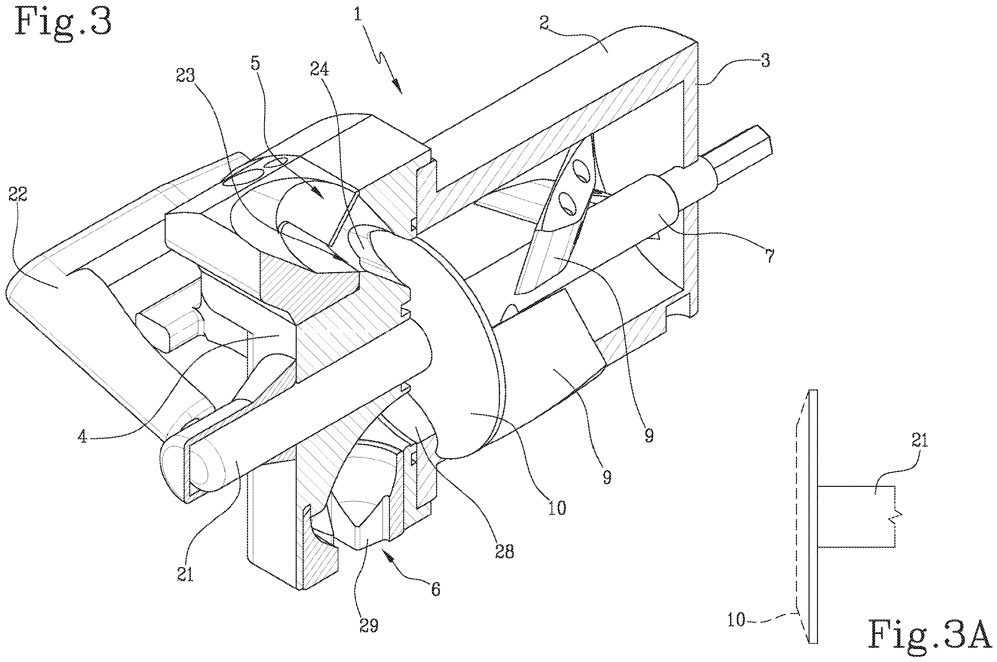

Figure 3A shows an alternative embodiment of the disc-shaped selector element 10.

According to this solution, the inner surface of the selector element 10 has a greater thickness to form a surface with a truncated cone cross-section with the annular surface inclined towards the inside of the chamber of the cylindrical body 2.

These annular surfaces can help the infeed of the mixture by directing it downwards and directing the product obtained towards the outfeed zone of the product.

As illustrated, the machine 100 comprises a unit 13 for generating air connected with the inside of the cylindrical body 2 through a channel 14 made on the closing head 4 and leading into the surface of the closing head 4 engaged by the selector element 10.

In light of this, the selector element 10 has a through hole 15 on its disc-shaped surface configured to be positioned coinciding with or coaxially with the air passage channel 14 leading into the cylindrical body 2 when the selector element 10 is positioned with the relative interruption 11 at the dispensing means 6 in such a way as to allow air to enter the cylindrical body 2.

This air supply system is used to have a correct and complete dispensing of the cold product.

In fact, the agitation of the mixture inside the cylindrical body 2 is also used to favour the incorporation of the air in the product to increase the volume of the compound and soften it.

The absorption of the air in the product to increase the volume reduces the pressure inside the chamber of the cylindrical body 2 until it has a substantial negative pressure inside the chamber.

Therefore, at the end of the agitation procedure, and activating the selector element 10 in the dispensing position, an introduction of air is performed in the chamber of the cylindrical body 2 in such a way as to increase the internal pressure and thereby perform a correct and complete dispensing of the cold product.

The machine 100 also comprises a device 16 for feeding a liquid (water) having a first conduit 17.

The machine 100 also comprises a device 18 for heating the liquid positioned between the first conduit 17 and the closing head 4 and a second conduit 19 for the passage of heated liquid made, at least partly, in the closing head 4 and leading out close to the infeed means 5.

The device 16 for feeding the liquid may be a container coupled to the machine 100 or also a connector for supplying mains water connected to the machine 100.

The heating device 18 is configured for heating and sending the fluid at a temperature of between 80° and 95°C.

Thanks to this system for feeding hot fluid it is possible, as will be described, to clean and sanitise both the infeed means 5 and the chamber of the cylindrical body 2 cyclically or also upon each dispensing of cold product if necessary.

The liquid used may be expelled through the dispensing means 6 and with the aid of the air under pressure so as not to have to frequently remove the closing head 4.

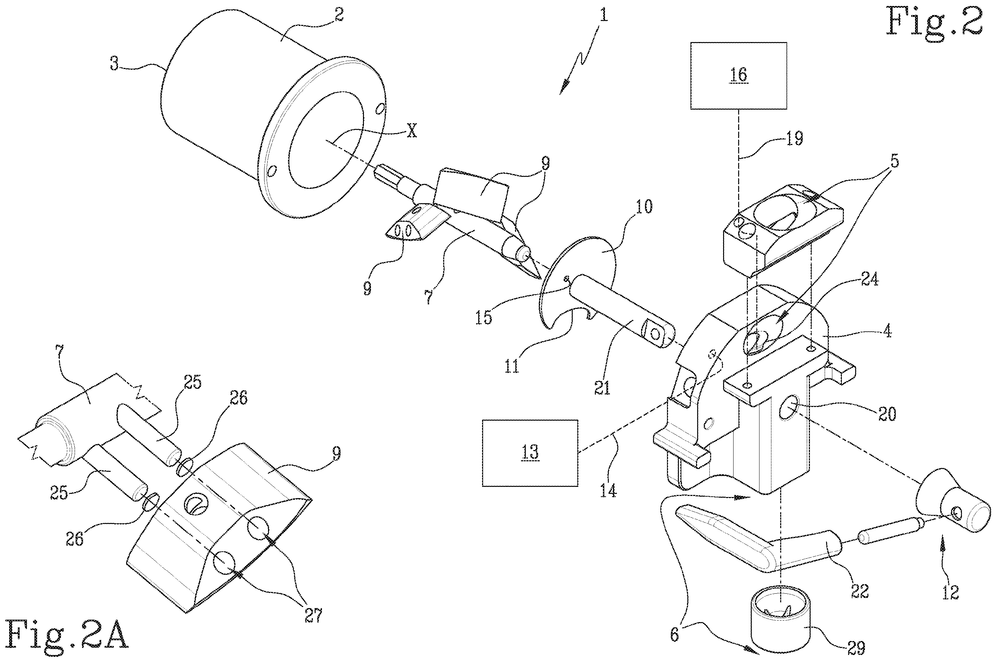

Alternatively, the machine 100 (see Figure 2) may comprise an intermediate conduit connected, upstream, to the first conduit 17 and, downstream, to the second conduit 19.

The intermediate conduit is configured to by pass the heating device 18 (through control valves not illustrated) for directly feeding the liquid at ambient temperature towards the closing head 4 if it is only necessary to carry out a rapid washing of the operating zones of the machine, between one operating cycle and another in rapid succession.

As illustrated in Figures 2 and 3, the closing head 4 has a through seat 20 engaged by a rotatable rod 21 and keyed, at one end, to the selector element 10, and, at the other end, to a control lever 22 positioned on the outer part of the closing head 4.

The control lever 22 defines the control unit 12.

Again as illustrated, the infeed means 5 comprise an open manifold 23 formed on the upper part of the closing head 4.

The manifold 23 has a chute surface 24 extending at an angle towards the longitudinal axis X of extension of the cylindrical body 2.

In light of this, the second conduit 19 for the passage of heated liquid leads to the chute surface 24 of the manifold 23.

In this way, the heated liquid can be introduced along the manifold 23 and clean the inclined surface 24.

With the selector element 10 positioned with the interruption 11 at the infeed means 5, the liquid can enter the chamber of the cylindrical body 2 and clean it.

After the cleaning step has been completed, the selector element 10 is rotated and moved, with its interruption 11, to the dispensing means 6.

The opening of the dispensing means 6 allows the liquid to escape from the cylindrical body 2, if necessary helped by the introduction of air again into the cylindrical body 2.

As illustrated, each blade 9 of the mixer (in this case three blades 9) is slidably inserted in a pair of pins 25 radially protruding from the shaft 7.

An elastic element 26 is interposed between each pin 25 and a corresponding cavity 27 (preferably blind) made in each blade 9 to allow a radial movement in both directions of the blade 9 relative to the shaft 7 (see Figure 2a).

In light of this, each blade 9 has a trapezoidal cross section and is positioned inclined relative to the shaft 7 in such a way as to have a surface, with larger extension, positioned along a trajectory diagonal relative to the longitudinal axis X of extension of the cylindrical body 2 and facing towards the closing head 4.

The three blades 9 illustrated are positioned at reciprocal distances from each other along the shaft 7 in such a way as to engage almost the entire extension of the chamber of the cylindrical body 2.

In light of this, the shaft 7 is rotatably keyed with a relative end at the selector element 10.

The particular shape of each blade 9 and its geometrical arrangement on the shaft 7 makes it possible to obtain a different positioning of the product if it is being formed in the chamber or if, once ready, it is being dispensed.

In practice, with a first direction of rotation of the shaft 7, the blades 9 tend to carry the mixture towards the bottom 3 of the chamber of the cylindrical body 2 (the coldest part) for mixing and cooling the mixture.

Once the product has been formed, it is possible to reverse the direction of rotation, in such a way that the blades 9 can carry the product towards the dispensing means 6 to obtain the dispensing.

The above-mentioned dispensing means 6 comprise an opening 28 made in the closing head 4 connected to a dispensing nozzle 29.

Thanks to this machine 100 it is possible to obtain a cold product in an extremely short time and of high quality.

The product forming cycle may also be controlled by a control unit 30 which controls the drive unit 8 of the shaft 7 and the devices 13 and 16 for dispensing heated air and liquid.

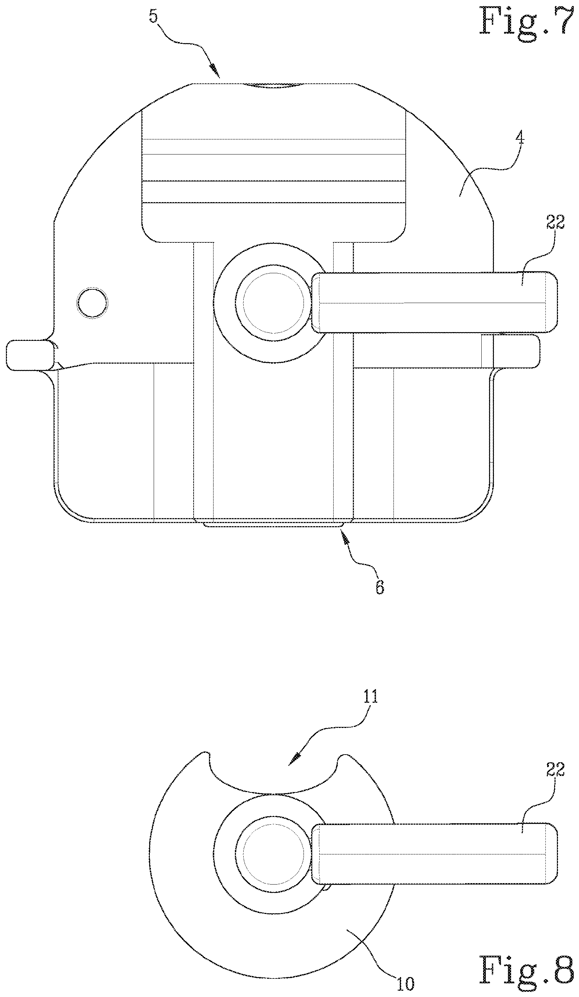

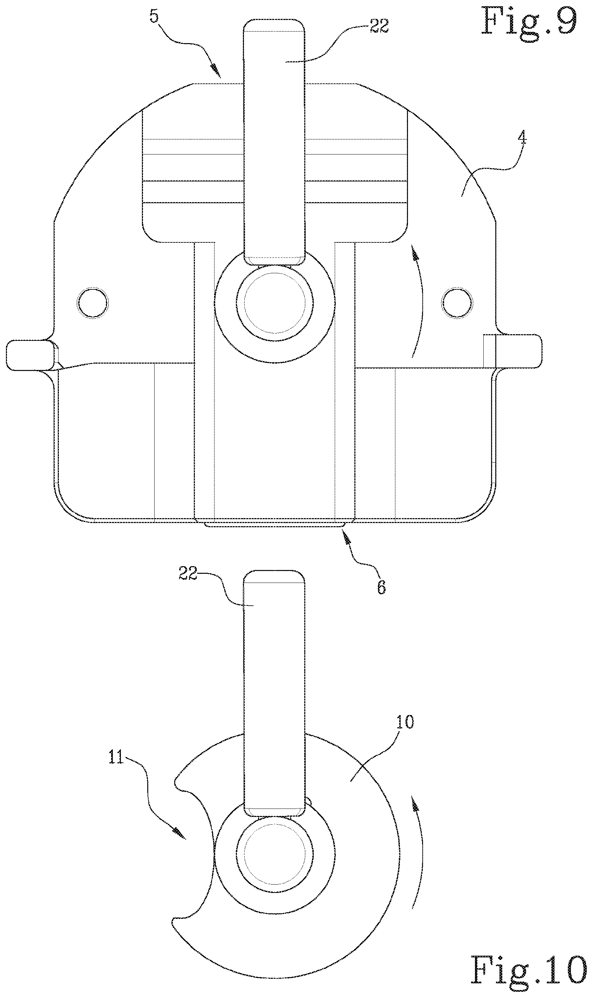

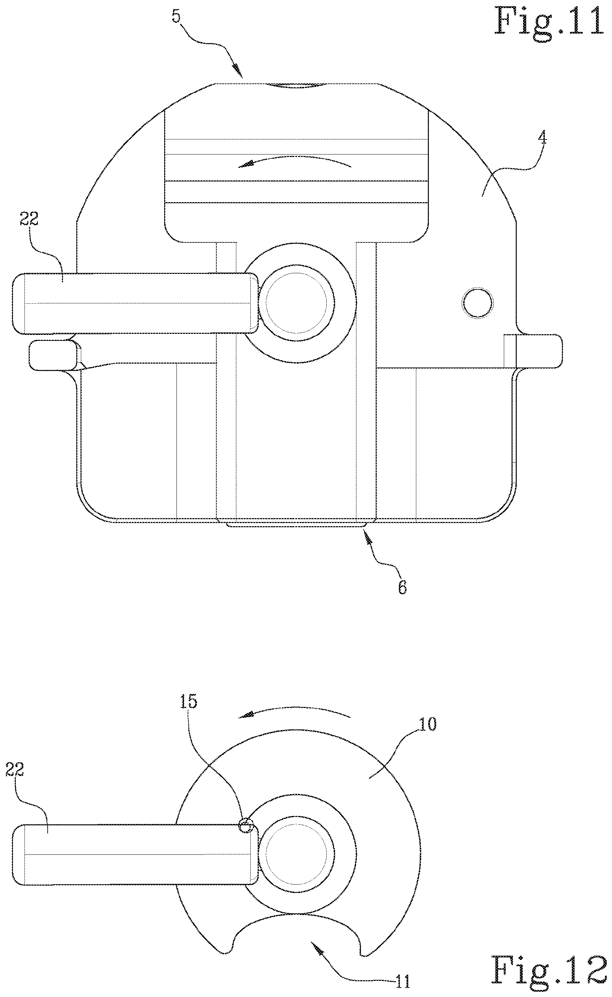

In order to obtain a cold food product with this machine 100 the following steps are performed:
- preparing the selector element 10 with the interruption 11 at the infeed means 5 (Figures 7 and 8);
- feeding the quantity of liquid or creamy mixture into the cylindrical body 2 through the manifold 23;
- rotating the selector element 10, by means of the lever 22, by an angle such as to determine a closed position of the infeed means 5 and of the dispensing means 6, that is to say, with the interruption 11 in an intermediate position between the two means 5 and 6 (Figures 9, 10);
- activating the mixer with rotation of the shaft 7 and of the blades 9 in a first direction of rotation for mixing and cooling the mixture for a predetermined time (less than a minute);
- further rotating the selector element 10, by means of the lever 22, by a further angle such as to carry the interruption 11 of the selector element 10 to the dispensing means 6 (Figures 11 and 12);
- activating the mixer with rotation of the shaft 7 and of the blades 9 in a second direction of rotation for dispensing the cold product and simultaneously activating the device 13 for generating air to allow a quick, safe and complete dispensing of the cold product through the nozzle 29.

The washing and sanitising cycle of the chamber of the cylindrical body 2 occurs with the same method just described for forming the cold product, but with faster times.

The preset aims are achieved with the machine just described by means of an extremely compact and versatile structure of the mixing and cooling unit.

The closing head is provided with a set of components which are essential for machine operation but which are structured in such a way as to be reduced in size, whilst maintaining a high level of practicality and operating precision.

The closing head, having a closing opening system inside the mixing and cooling chamber may be structured in a simple manner and without the need for bulky and expensive external elements.

Similarly, the mixing and cooling chamber may be structured in a simple and compact manner as it does not need other openings along its surface and so as to obtain a high level of efficiency and quality of the product.

## Claims

1. A machine for preparing a single dose of a cold food product comprising a mixing and cooling unit (1) having at least:
- a cylindrical cooling body (2), having a longitudinal axis (X) of extension, provided with a rear wall or bottom (3) and a front opening;
- a head (4) for closing the front opening of the cylindrical body (2) having infeed means (5) configured for the entrance into the cylindrical body (2) of a liquid or creamy mixture and dispensing means (6) configured for extracting/dispensing cold product prepared in the cylindrical body (2);
- a mixer comprising a rotary shaft (7) positioned parallel to the longitudinal axis (X) of extension of the cylindrical body (2) and connected to a drive unit (8); the shaft (7) being provided with a plurality of blades (9) protruding radially from the shaft (7) and configured for mixing the mixture of liquid-creamy product in the cylindrical body (2);
**characterised in that** the closing head (4) comprises:
- at least one function selector element (10) constrained on a surface of the closing head (4) positioned towards the inside of the cylindrical body (2); the at least one selector element (10) having a disc shape provided with an interruption (11) along the relative circumference which is able to position itself alternatively, by means of a rotation of the selector element (10) about the relative axis, at least at the infeed means (5) or dispensing means (6) to obtain a selective connection of the cylindrical body (2) with the outside;
- a control unit (12) outside the cylindrical body (2), connected to the selector element (10), and configured to obtain the rotation of the selector element (10).

2. The machine according to claim 1, comprising a unit (13) for generating air connected with the inside of the cylindrical body (2) through a channel (14) made on the closing head (4) and leading into the surface of the closing head (4) engaged by the selector element (10).

3. The machine according to claim 2, wherein the selector element (10) has a through hole (15) on its disc-shaped surface configured to be positioned coinciding with or coaxially with the air passage channel (14) leading into the cylindrical body (2) when the selector element (10) is positioned with the relative interruption (11) at the dispensing means (6) in such a way as to allow air to enter the cylindrical body (2).

4. The machine according to any one of the preceding claims, comprising:
- a device (16) for feeding a liquid having a first conduit (17);
- a second conduit (19) for the passage of liquid formed, at least partly, in the closing head (4), connected to the first conduit (7), and leading out close to the infeed means (5).

5. The machine according to claim 4, comprising a device (18) for heating the liquid positioned between the first conduit (17) and the second conduit (19) and configured for heating the liquid fed by the feed device (16) prior to its feeding in the first conduit (19).

6. The machine according to any one of the preceding claims, wherein the closing head (4) has a through seat (20) engaged by a rotatable rod (21) and keyed, at one end, to the selector element (10), and, at the other end, to a control lever (22) positioned on the outer part of the closing head (4); the control lever (22) defining the control unit (12).

7. The machine according to any one of the preceding claims, wherein the infeed means (5) comprise an open manifold (23) formed on the upper part of the closing head (4); the manifold (23) having a chute surface (24) extending at an angle towards the longitudinal axis (X) of extension of the cylindrical body (2).

8. The machine according to any one of claims 4 to 7, wherein the second conduit (19) for the passage of heated liquid leads to the chute surface (24) of the manifold (23).

9. The machine according to any one of the preceding claims, wherein each blade (9) of the mixer is slidably inserted in a pair of pins (25) protruding radially from the shaft (7); an elastic element (26) being interposed between each pin (25) and a corresponding seat (27) formed on each blade (9) to allow a radial movement in both directions of the blade (9) relative to the shaft (7).

10. The machine according to any one of the preceding claims, wherein each blade (9) has a trapezoidal cross section and is positioned inclined relative to the shaft (7) in such a way as to have a surface, with larger extension, positioned along a trajectory diagonal relative to the longitudinal axis (X) of extension of the cylindrical body (2) and facing towards the closing head (4).

11. The machine according to any one of the preceding claims, wherein the shaft (7) is rotatably keyed with a relative end at the selector element (10).

12. The machine according to any one of the preceding claims, wherein the control unit (12) is configured for rotating and positioning the selector element (10) in a first operating position for mixture infeed, in a second position for cold product outfeed and a third intermediate position for forming product with closing of the infeed means (5) and dispensing means (6).

13. The machine according to any one of the preceding claims, wherein the selector element (10) has its interruption (11) formed by a half-moon opening made along a peripheral zone of the disc-shaped element.

14. The machine according to any one of the preceding claims, wherein the inner surface of the selector element (10) has a greater thickness to form a surface with a truncated cone section with the annular surface inclined towards the inside of the chamber of the cylindrical body (2).

15. A method for obtaining a cold food product with a machine (100) according to claim 12, comprising the following steps:
- preparing the selector element (10) with the interruption (11) at the infeed means (5);
- feeding the quantity of liquid or creamy mixture into the cylindrical body (2) through the infeed means (5);
- rotating the selector element (10) by an angle such as to determine a closed position of the infeed means (5) and of the dispensing means (6), that is to say, with the interruption (11) in an intermediate position between the two means (5, 6);
- activating the mixer with rotation of the shaft (7) and the blades (9) in a first direction of rotation for mixing and cooling the mixture for a predetermined length of time;
- further rotation of the selector element (10) by a further angle such as to carry the interruption (11) of the selector element (10) to the dispensing means (6);
- activating the mixer with rotation of the shaft (7) and the blades (9) in a second direction of rotation for dispensing the cold product through the dispensing means (6).

## Patentansprüche

1. Maschine zur Herstellung einer Einzeldosis eines kalten Lebensmittelprodukts, umfassend eine Misch- und Kühleinheit (1), aufweisend mindestens:
- einen zylindrischen Kühlkörper (2) mit einer Erstreckungslängsachse (X), der mit einer Rückwand oder einem Boden (3) und einer vorderen Öffnung versehen ist;
- einen Kopf (4) zum Verschließen der vorderen Öffnung des zylindrischen Körpers (2) mit Einlaufmitteln (5), die zum Eintritt einer flüssigen oder cremigen Mischung in den zylindrischen Körper (2) ausgelegt sind, und Abgabemitteln (6), die zum Extrahieren/Abgeben von im zylindrischen Körper (2) hergestelltem kaltem Produkt ausgelegt sind;
- einen Mischer, der eine Drehwelle (7) umfasst, die parallel zur Erstreckungslängsachse (X) des zylindrischen Körpers (2) positioniert und mit einer Antriebseinheit (8) verbunden ist; wobei die Welle (7) mit einer Vielzahl von Schaufeln (9) versehen ist, die radial von der Welle (7) vorstehen und zum Mischen der Mischung aus flüssig-cremigem Produkt in dem zylindrischen Körper (2) ausgelegt sind;
**dadurch gekennzeichnet, dass** der Schließkopf (4) umfasst:
- mindestens ein Funktionsauswahlelement (10), das auf einer Oberfläche des Schließkopfs (4), die zum Inneren des zylindrischen Körpers (2) hinführend positioniert ist, gebunden ist; wobei das mindestens eine Auswahlelement (10) eine Scheibenform aufweist, die mit einer Unterbrechung (11) entlang des relativen Umfangs versehen ist, die in der Lage ist, sich alternativ durch eine Drehung des Auswahlelements (10) um die relative Achse mindestens an den Einlaufmitteln (5) oder Abgabemitteln (6) zu positionieren, um eine selektive Verbindung des zylindrischen Körpers (2) mit der Außenseite zu erzielen;
- eine Steuereinheit (12) außerhalb des zylindrischen Körpers (2), die mit dem Auswahlelement (10) verbunden und ausgelegt ist, um die Drehung des Auswahlelements (10) zu erzielen.

2. Maschine nach Anspruch 1, umfassend eine Einheit (13) zum Erzeugen von Luft, die mit dem Inneren des zylindrischen Körpers (2) durch einen Kanal (14) verbunden ist, der an dem Schließkopf (4) ausgebildet ist und in die Oberfläche des Schließkopfes (4) führt, in die das Auswahlelement (10) eingreift.

3. Maschine nach Anspruch 2, wobei das Auswahlelement (10) an seiner scheibenförmigen Oberfläche ein Durchgangsloch (15) aufweist, das so ausgelegt ist, dass es mit dem Luftdurchlasskanal (14), der in den zylindrischen Körper (2) führt, zusammenfällt oder koaxial dazu positioniert ist, wenn das Auswahlelement (10) mit der relativen Unterbrechung (11) an den Abgabemitteln (6) so positioniert ist, dass Luft in den zylindrischen Körper (2) eintreten kann.

4. Maschine nach einem der vorhergehenden Ansprüche, umfassend:
- eine Vorrichtung (16) zum Zuführen einer Flüssigkeit mit einer ersten Leitung (17);
- eine zweite Leitung (19) für den Durchlauf von Flüssigkeit, die zumindest teilweise in dem Schließkopf (4) gebildet ist, mit der ersten Leitung (7) verbunden ist und in der Nähe der Einlaufmittel (5) herausführt.

5. Maschine nach Anspruch 4, umfassend eine Vorrichtung (18) zum Erwärmen der Flüssigkeit, die zwischen der ersten Leitung (17) und der zweiten Leitung (19) positioniert und zum Erwärmen der von der Zuführvorrichtung (16) zugeführten Flüssigkeit vor ihrer Zuführung in die erste Leitung (19) ausgelegt ist.

6. Maschine nach einem der vorhergehenden Ansprüche, wobei der Schließkopf (4) einen Durchgangssitz (20) aufweist, in den eine drehbare Stange (21) eingreift und der an einem Ende mit dem Auswahlelement (10) und am anderen Ende mit einem Steuerhebel (22) verkeilt ist, der am äußeren Teil des Schließkopfes (4) positioniert ist; wobei der Steuerhebel (22) die Steuereinheit (12) definiert.

7. Maschine nach einem der vorhergehenden Ansprüche, wobei die Einlaufmittel (5) einen offenen Verteiler (23) umfassen, der am oberen Teil des Schließkopfes (4) gebildet ist; wobei der Verteiler (23) eine Rutschenoberfläche (24) aufweist, die sich in einem Winkel zur Erstreckungslängsachse (X) des zylindrischen Körpers (2) erstreckt.

8. Maschine nach einem der Ansprüche 4 bis 7, wobei die zweite Leitung (19) für den Durchlauf von erwärmter Flüssigkeit zu der Rutschenoberfläche (24) des Verteilers (23) führt.

9. Maschine nach einem der vorhergehenden Ansprüche, wobei eine jede Schaufel (9) des Mischers verschiebbar in ein Paar von Stiften (25) eingesetzt ist, die radial von der Welle (7) vorstehen; wobei ein elastisches Element (26) zwischen einem jeden Stift (25) und einem entsprechenden Sitz (27), der an einer jeden Schaufel (9) gebildet ist, eingefügt ist, um eine radiale Bewegung in beide Richtungen der Schaufeln (9) relativ zur Welle (7) zu ermöglichen.

10. Maschine nach einem der vorhergehenden Ansprüche, wobei eine jede Schaufel (9) einen trapezförmigen Querschnitt aufweist und relativ zur Welle (7) so geneigt positioniert ist, dass sie eine Oberfläche mit größerer Erstreckung aufweist, die entlang einer Bahndiagonale relativ zur Erstreckungslängsachse (X) des zylindrischen Körpers (2) positioniert ist und zum Schließkopf (4) weist.

11. Maschine nach einem der vorhergehenden Ansprüche, wobei die Welle (7) mit einem relativen Ende am Auswahlelement (10) drehbar verkeilt ist.

12. Maschine nach einem der vorhergehenden Ansprüche, wobei die Steuereinheit (12) zum Drehen und Positionieren des Auswahlelements (10) in einer ersten Betriebsposition für den Mischungseinlauf, in einer zweiten Position für den Kaltproduktauslauf und in einer dritten Zwischenposition für die Bildung des Produkts durch Schließen der Einlaufmittel (5) und Abgabemittel (6) ausgelegt ist.

13. Maschine nach einem der vorhergehenden Ansprüche, wobei die Unterbrechung (11) des Auswahlelements (10) durch eine Halbmondöffnung gebildet ist, die entlang einer umlaufenden Zone des scheibenförmigen Elements ausgebildet ist.

14. Maschine nach einem der vorhergehenden Ansprüche, wobei die Innenoberfläche des Auswahlelements (10) eine größere Dicke aufweist, um eine Oberfläche mit einem kegelstumpfförmigen Abschnitt zu bilden, wobei die ringförmige Oberfläche zum Inneren der Kammer des zylindrischen Körpers (2) geneigt ist.

15. Verfahren zum Erhalten eines kalten Lebensmittelprodukts mit einer Maschine (100) nach Anspruch 12, umfassend die folgenden Schritte:
- Vorbereiten des Auswahlelements (10) mit der Unterbrechung (11) an den Einlaufmitteln (5);
- Zuführen der Menge an flüssiger oder cremiger Mischung in den zylindrischen Körper (2) durch die Einlaufmittel (5);
- Drehen des Auswahlelements (10) um einen Winkel, um eine geschlossene Position der Einlaufmittel (5) und der Abgabemittel (6) zu bewirken, d. h. mit der Unterbrechung (11) in einer Zwischenposition zwischen den beiden Mitteln (5, 6);
- Aktivieren des Mischers mit Drehung der Welle (7) und der Schaufeln (9) in einer ersten Drehrichtung zum Mischen und Kühlen der Mischung für eine vorbestimmte Zeitdauer;
- weiteres Drehen des Auswahlelements (10) um einen weiteren Winkel, um die Unterbrechung (11) des Auswahlelements (10) zu den Abgabemitteln (6) zu tragen;
- Aktivieren des Mischers mit Drehung der Welle (7) und der Schaufeln (9) in einer zweiten Drehrichtung zum Abgeben des kalten Produkts durch die Abgabemittel (6).

## Revendications

1. Machine de préparation d'une dose unique d'un produit alimentaire froid, comprenant une unité de mélange et de refroidissement (1) comportant au moins :
- un corps cylindrique de refroidissement (2), présentant un axe longitudinal (X) d'extension, pourvu d'une paroi arrière ou fond (3) et d'une ouverture frontale ;
- une tête (4), destinée à fermer l'ouverture frontale du corps cylindrique (2), comportant des moyens d'alimentation (5) configurés pour l'entrée dans le corps cylindrique (2) d'un mélange liquide ou crémeux, et des moyens de distribution (6) configurés pour extraire/distribuer le produit froid préparé dans le corps cylindrique (2) ;
- un mélangeur comprenant un arbre (7) rotatif positionné parallèlement à l'axe longitudinal (X) d'extension du corps cylindrique (2) et relié à une unité d'entraînement (8) ; l'arbre (7) étant pourvu d'une pluralité de pales (9) faisant saillie radialement à partir de l'arbre (7) et configurées pour mélanger le mélange de produit liquide-crémeux dans le corps cylindrique (2) ;
**caractérisée en ce que** la tête de fermeture (4) comprend :
- au moins un élément sélecteur (10) de fonction contraint sur une surface de la tête de fermeture (4) positionnée vers l'intérieur du corps cylindrique (2) ; l'au moins un élément sélecteur (10) ayant une forme de disque pourvu d'une interruption (11) le long de sa circonférence, qui est capable de se positionner alternativement, au moyen d'une rotation de l'élément sélecteur (10) autour de son axe, au moins au niveau des moyens d'alimentation (5) ou des moyens de distribution (6) afin d'obtenir un raccordement sélectif du corps cylindrique (2) avec l'extérieur ;
- une unité de commande (12) située à l'extérieur du corps cylindrique (2), reliée à l'élément sélecteur (10) et conçue pour obtenir la rotation de l'élément sélecteur (10).

2. Machine selon la revendication 1, comprenant une unité (13) de génération d'air reliée à l'intérieur du corps cylindrique (2) par l'intermédiaire d'un canal (14) formé sur la tête de fermeture (4) et débouchant dans la surface de la tête de fermeture (4) mise en prise avec l'élément sélecteur (10).

3. Machine selon la revendication 2, dans laquelle l'élément sélecteur (10) comporte un trou traversant (15), sur sa surface discoïdale, configuré pour être positionné de manière à coïncider avec le / ou à être coaxial au canal de passage d'air (14) débouchant dans le corps cylindrique (2) lorsque l'élément sélecteur (10) est positionné avec l'interruption (11) relative au niveau des moyens de distribution (6) de manière à permettre à l'air de pénétrer dans le corps cylindrique (2).

4. Machine selon l'une quelconque des revendications précédentes, comprenant :
- un dispositif (16) d'alimentation en liquide comportant un premier conduit (17) ;
- un second conduit (19), pour le passage du liquide formé, au moins en partie, dans la tête de fermeture (4), relié au premier conduit (7) et débouchant à proximité des moyens d'alimentation (5).

5. Machine selon la revendication 4, comprenant un dispositif (18) destiné à chauffer le liquide, placé entre le premier conduit (17) et le second conduit (19) et conçu pour chauffer le liquide alimenté par le dispositif d'alimentation (16) avant son alimentation dans le premier conduit (19).

6. Machine selon l'une quelconque des revendications précédentes, dans laquelle la tête de fermeture (4) comporte un siège traversant (20) mis en prise avec une tige rotative (21) et claveté, à une extrémité, à l'élément sélecteur (10) et, à l'autre extrémité, à un levier de commande (22) positionné sur la partie extérieure de la tête de fermeture (4) ; le levier de commande (22) définissant l'unité de commande (12).

7. Machine selon l'une quelconque des revendications précédentes, dans laquelle les moyens d'alimentation (5) comprennent un collecteur (23) ouvert formé sur la partie supérieure de la tête de fermeture (4) ; le collecteur (23) présentant une surface de chute (24) s'étendant selon un angle vers l'axe longitudinal (X) d'extension du corps cylindrique (2).

8. Machine selon l'une quelconque des revendications 4 à 7, dans laquelle le second conduit (19) pour le passage du liquide chauffé mène à la surface de chute (24) du collecteur (23).

9. Machine selon l'une quelconque des revendications précédentes, dans laquelle chaque pale (9) du mélangeur est insérée de manière coulissante dans une paire de broches (25) faisant saillie radialement à partir de l'arbre (7) ; un élément élastique (26) étant interposé entre chaque broche (25) et un siège correspondant (27) formé sur chaque pale (9) pour permettre un mouvement radial dans les deux sens de la pale (9) par rapport à l'arbre (7).

10. Machine selon l'une quelconque des revendications précédentes, dans laquelle chaque pale (9) présente une section transversale trapézoïdale et est disposée de manière inclinée par rapport à l'arbre (7), de telle sorte qu'une surface, de plus grande extension, soit positionnée le long d'une trajectoire diagonale par rapport à l'axe longitudinal (X) d'extension du corps cylindrique (2) et soit orientée vers la tête de fermeture (4).

11. Machine selon l'une quelconque des revendications précédentes, dans laquelle l'arbre (7) est claveté de manière rotative avec une extrémité relative au niveau de l'élément sélecteur (10).

12. Machine selon l'une quelconque des revendications précédentes, dans laquelle l'unité de commande (12) est configurée pour faire tourner et positionner l'élément sélecteur (10) dans une première position de fonctionnement pour l'alimentation en mélange, dans une deuxième position pour la sortie du produit froid et dans une troisième position intermédiaire pour la formation du produit avec fermeture des moyens d'alimentation (5) et des moyens de distribution (6).

13. Machine selon l'une quelconque des revendications précédentes, dans laquelle l'élément sélecteur (10) présente son interruption (11) formée par une ouverture en demi-lune pratiquée le long d'une zone périphérique de l'élément discoïdal.

14. Machine selon l'une quelconque des revendications précédentes, dans laquelle la surface intérieure de l'élément sélecteur (10) présente une épaisseur plus grande pour former une surface à section tronconique avec la surface annulaire inclinée vers l'intérieur de la chambre du corps cylindrique (2).

15. Procédé d'obtention d'un produit alimentaire froid à l'aide d'une machine (100) selon la revendication 12, comprenant les étapes suivantes :
- préparer l'élément sélecteur (10) avec l'interruption (11) au niveau des moyens d'alimentation (5) ;
- introduire la quantité de mélange liquide ou crémeux dans le corps cylindrique (2) par l'intermédiaire des moyens d'alimentation (5) ;
- faire tourner l'élément sélecteur (10) d'un angle tel qu'il détermine une position fermée des moyens d'alimentation (5) et des moyens de distribution (6), c'est-à-dire avec l'interruption (11) dans une position intermédiaire entre les deux moyens (5, 6) ;
- activer le mélangeur par rotation de l'arbre (7) et des pales (9) dans un premier sens de rotation pour mélanger et refroidir le mélange pendant une durée prédéterminée ;
- faire tourner davantage l'élément sélecteur (10) d'un angle supplémentaire de manière à amener l'interruption (11) de l'élément sélecteur (10) vers les moyens de distribution (6) ;
- activer le mélangeur par rotation de l'arbre (7) et des pales (9) dans un second sens de rotation pour distribuer le produit froid à travers les moyens de distribution (6).
